# EUROPEAN PATENT APPLICATION

(11) **EP 4 297 452 A1**
(43) Date of publication of application: **27.12.2023**
(21) Application number: 22755527.3
(22) Date of filing: 10.02.2022
(51) Int. Cl.: H04W 8/26

(54) **INFORMATION PROCESSING METHOD AND APPARATUS, AND RELATED DEVICE AND STORAGE MEDIUM**

(30) Priority: 18.02.2021 CN 202110190187
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: WANG, Dan, Beijing 100053 (CN); LI, Yongjing, Beijing 100053 (CN); SUN, Tao, Beijing 100053 (CN)
(74) Representative: GPI Brevets
(86) International application number: PCT/CN2022/075932
(87) International publication number: WO 2022/174754

(57) **Abstract**

An information processing method, a device, a related apparatus and a storage medium are provided. The method includes: obtaining an Internet Protocol (IP) domain from a Unified Data Management (UDM) or a Unified Data Repository (UDR); sending the obtained IP domain to a Policy Control Function (PCF).

## Description

### CROSS REFERENCE OF RELATED APPLICATION

The present disclosure claims a priority of Chinese patent disclosure No. 202110190187.6 filed on February 18, 2021, which is incorporated herein by reference in its entirety.

### TECHNICAL FIELD

The present disclosure relates to the field of mobile communication, and in particular to an information processing method, a device, a related apparatus and a storage medium.

### BACKGROUND

During a session establishment process, a Session Management Function (SMF, Session Management Function) may allocate an Internet Protocol (IP) address to the terminal. In the process of allocating the IP addresses, private network address conflicts may occur; moreover, it is more and more common to allocate private network addresses for industrial users in the industry network, which makes the problem of private network address conflicts more obvious. In order to solve the problem of private network address conflicts, the basic idea of using address domains (namely IP domains) is proposed.

However, there is still no effective solution for how to effectively use the address domain to solve the problem of private network address conflicts.

### SUMMARY

To solve related technical problems, embodiments of the present disclosure provide an information processing method, device, a related apparatus, and a storage medium.

The technical scheme in an embodiment of the present disclosure is implemented in this way:
An information processing method is provided in an embodiment of the present disclosure, applied to a Session Management Function (SMF), including:
obtaining an Internet Protocol (IP) domain from a Unified Data Management (UDM) or a Unified Data Repository (UDR);
sending the obtained IP domain to a Policy Control Function (PCF).

In the above embodiments, the IP domain is obtained from the UDM or the UDR during a session establishment procedure.

In the above embodiments, when the IP domain is obtained from the UDM or the UDR, the method further includes:
obtaining an IP index from the UDM or the UDR.

In the above embodiments, the method further includes:
sending an IP domain corresponding to a terminal to a network address translation function.

In the above embodiments, the method further includes:
determining an IP address of the terminal;
sending the IP address of the terminal to the network address translation function.

In the above embodiments, the method further includes:
selecting a User Plane Function (UPF);
determining the corresponding network address translation function according to the selected UPF.

In the above embodiments, the method further includes:
determining the corresponding network address translation function according to an operator's local policy.

In the above embodiments, the sending the IP domain corresponding to the terminal to the network address translation function includes:
sending the IP domain corresponding to the terminal to the network address translation function, based on an N4 interface protocol;
   or
sending the IP domain corresponding to the terminal to the network address translation function, through the selected UPF.

In the above embodiments, the method further includes:
receiving acknowledgement information fed back by the network address translation function.

An information processing method is further provided in an embodiment of the present disclosure, applied to a Unified Data Management (UDM) or a Unified Data Repository (UDR), including:
providing an Internet Protocol (IP) domain to a Session Management Function (SMF).

In the above embodiments, an IP domain is provided to the SMF during a session establishment procedure.

In the above embodiments, when the IP domain is provided to the SMF, the method further includes:
providing an IP index to the SMF.

In the above embodiments, the provided IP domain satisfies one of the following conditions:
the IP domain is provided to the UDM or the UDR by an Application Function (AF) or a Dynamic Host Configuration Protocol (DHCP) server or an Authentication, Authorization, Accounting (AAA) server through a capability opening function;
the IP domain is configured by a network management device to the UDM or the UDR;
the IP domain is configured locally.

An information processing method is further provided in an embodiment of the present disclosure, applied to a Session Management Function (SMF), including:
sending an Internet Protocol (IP) domain corresponding to a terminal to a network address translation function, where the corresponding IP domain is obtained from a Unified Data Management (UDM) or a Unified Data Repository (UDR).

In the above embodiments, the method further includes:
determining an IP address of the terminal;
sending the IP address of the terminal to the network address translation function.

In the above embodiments, the method further includes:
selecting a User Plane Function (UPF) for the terminal;
determining the corresponding network address translation function according to the selected UPF.

In the above embodiments, the method further includes:
determining the corresponding network address translation function according to an operator's local policy.

In the above embodiments, the sending the IP domain corresponding to the terminal to the network address translation function includes:
sending the IP domain corresponding to the terminal to the network address translation function, based on an N4 interface protocol;
   or
sending the IP domain corresponding to the terminal to the network address translation function, through the selected UPF.

In the above embodiments, the method further includes:
receiving acknowledgement information fed back by the network address translation function.

An information processing method is further provided in an embodiment of the present disclosure, applied to a network address translation function, including:
receiving an Internet Protocol (IP) domain corresponding to a terminal sent by a Session Management Function (SMF), where the corresponding IP domain is obtained from a Unified Data Management (UDM) or a Unified Data Repository (UDR);
receiving a data packet sent by the terminal;
determining the corresponding IP domain, through first information and/or second information of the received data packet, where the first information represents a tunnel path of the received data packet, the second information represents an IP address of the terminal; and
mapping a source address of the received data packet through the determined IP domain.

In the above embodiments, when receiving the IP domain corresponding to the terminal sent by the SMF, the method further includes:
receiving the IP address of the terminal sent by the SMF.

In the above embodiments, the receiving the IP domain corresponding to the terminal sent by the SMF includes:
receiving the IP domain corresponding to the terminal sent by the SMF, based on an N4 interface protocol;
   or
receiving the IP domain corresponding to the terminal sent by the SMF, through the UPF selected by the SMF.

In the above embodiments, the method further includes:
feeding back acknowledgement information to the SMF.

In the above embodiments, the mapping the source address of the received data packet through the determined IP domain includes:
mapping the source address of the received data packet, through the determined IP domain and a corresponding relationship between the IP domain and an external IP address field.

An information processing device is further provided in an embodiment of the present disclosure, including:
an obtaining unit, configured to obtain an Internet Protocol (IP) domain from a Unified Data Management (UDM) or a Unified Data Repository (UDR);
a first sending unit, configured to send the obtained IP domain to a Policy Control Function (PCF).

An information processing device is further provided in an embodiment of the present disclosure, including:
a providing unit, configured to provide an Internet Protocol (IP) domain to a Session Management Function (SMF).

An information processing device is further provided in an embodiment of the present disclosure, including:
a second sending unit, configured to send an Internet Protocol (IP) domain corresponding to a terminal to a network address translation function, where the corresponding IP domain is obtained from a Unified Data Management (UDM) or a Unified Data Repository (UDR).

An information processing device is further provided in an embodiment of the present disclosure, including:
a first sending unit, configured to send an Internet Protocol (IP) domain corresponding to a terminal to a network address translation function, where the corresponding IP domain is obtained from a Unified Data Management (UDM) or a Unified Data Repository (UDR).

An information processing device is further provided in an embodiment of the present disclosure, including:
a first receiving unit, configured to:
receive an Internet Protocol (IP) domain corresponding to a terminal sent by a Session Management Function (SMF), where the corresponding IP domain is obtained from a Unified Data Management (UDM) or a Unified Data Repository (UDR); and receive a data packet sent by the terminal
a first determining unit, configured to:
determine the corresponding IP domain, through first information and/or second information of the received data packet, where the first information represents a tunnel path of the received data packet, the second information represents an IP address of the terminal; and map a source address of the received data packet through the determined IP domain.

A Session Management Function (SMF) is further provided in an embodiment of the present disclosure, including: a first processor and a first communication interface; where,
the first communication interface is configured to: obtain an Internet Protocol (IP) domain from a Unified Data Management (UDM) or a Unified Data Repository (UDR), and send the obtained IP domain to a Policy Control Function (PCF);
   or
the first communication interface is configured to send an IP domain corresponding to a terminal to a network address translation function, where the corresponding IP domain is obtained from a UDM or a UDR.

A Unified Data Management (UDM) is further provided in an embodiment of the present disclosure, including: a second processor and a second communication interface; where,
the second communication interface is configured to provide an Internet Protocol (IP) domain to a Session Management Function (SMF).

A Unified Data Repository (UDR) is further provided in an embodiment of the present disclosure, including: a third processor and a third communication interface; where,
the third communication interface is configured to provide an Internet Protocol (IP) domain to a Session Management Function (SMF).

A network address translation function is further provided in an embodiment of the present disclosure, including:
a fourth communication interface, configured to:
receive an Internet Protocol (IP) domain corresponding to a terminal sent by a Session Management Function (SMF), where the corresponding IP domain is obtained from a Unified Data Management (UDM) or a Unified Data Repository (UDR); and receive a data packet sent by the terminal
a fourth processor, configured to:
   determine the corresponding IP domain, through first information and/or second information of the received data packet, where the first information represents a tunnel path of the received data packet, the second information represents an IP address of the terminal; and map a source address of the received data packet through the determined IP domain.

A Session Management Function (SMF) is further provided in an embodiment of the present disclosure, including: a first processor and a first memory configured to store a computer program operable on the first processor,
where the first processor is configured to execute the computer program to perform the method according to any one of claims 1 to 9, or to perform the method according to any one of claims 14 to 19.

A Unified Data Management (UDM) is further provided in an embodiment of the present disclosure, including: a second processor and a second memory configured to store a computer program operable on the second processor,
where the second processor is configured to execute the computer program to perform the method according to any one of claims 10 to 13.

A Unified Data Repository (UDR) is further provided in an embodiment of the present disclosure, including: a third processor and a third memory configured to store a computer program operable on the third processor,
where the third processor is configured to execute the computer program to perform the method according to any one of claims 10 to 13.

A network address translation function is further provided in an embodiment of the present disclosure, including: a fourth processor and a fourth memory configured to store a computer program operable on the fourth processor,
where the third processor is configured to execute the computer program to perform the method according to any one of claims 20 to 24.

A storage medium is further provided in an embodiment of the present disclosure, storing a computer program, where the computer program is executed by a processor to perform the method at the SFM side, or to perform method at eh UDM side, or to perform the method at the UDR side, or to perform the method at the network address translation function side.

According to the information processing method, the device, the related apparatus and the storage medium in the embodiments of the present disclosure, the IP domain information is dynamically obtained from UDM or UDR by SMF, so that the definition of the IP domain obtained by the SMF is the same as the definition of the IP domain obtained by the AF, thereby effectively configuring the IP domain information; in the case of using NAT, by opening the interface between SMF and NAT and exchanging information, the IP domain information understood by AF is consistent with the IP domain information used inside the core network, thereby effectively using the IP domain information.

### BRIEF DESCRIPTION OF THE DRAWINGS

Fig. 1 is a schematic flowchart of a first information processing method in an embodiment of the present disclosure;
Fig. 2 is a schematic view of a network architecture in an embodiment of the present disclosure;
Fig. 3 is a schematic flowchart of a second information processing method in an embodiment of the present disclosure;
Fig. 4 is a schematic flowchart of a session establishment in an embodiment of the present disclosure;
Fig. 5 is a schematic structural view of a first information processing device in an embodiment of the present disclosure;
Fig. 6 is a schematic structural view of a second information processing device in an embodiment of the present disclosure;
Fig. 7 is a schematic structural view of a third information processing device in an embodiment of the present disclosure;
Fig. 8 is a schematic structural view of an SMF in an embodiment of the present disclosure;
Fig. 9 is a schematic structural view of a UDM in an embodiment of the present disclosure;
Fig. 10 is a schematic structural view of a UDR in an embodiment of the present disclosure;
Fig. 11 is a schematic view of a network address translation function structure in an embodiment of the present disclosure; and
Fig. 12 is a schematic structural view of an information processing system in an embodiment of the present disclosure.

### DETAILED DESCRIPTION

The application will be further described in detail below in conjunction with the drawings and embodiments.

In related art, it is defined to transmit IP address pool information from UDM (also called UDM function) to SMF to assist in terminal IP address allocation; at the same time, when SMF does not obtain the static address of the terminal from UDM, during the session establishment process, the SMF obtains the subscribed IP index from the PCF, and the IP index indicates how the SMF allocates the terminal (also called (user equipment (UE)) IP address. In related art, there are three allocation methods.

However, in the process of allocating IP addresses, the private network IPv4 address conflicts may occur. In order to solve this problem, the basic idea of IP domain is proposed, that is, SMF allocates an IP domain field for different private network addresses; IP domain is used to indicate which address domain the IP address belongs to, and is used to resolve IPv4 address conflicts. Distinguish different Protocol Data Unit (PDU, Protocol Data Unit) sessions corresponding to the same IPv4 address, so as to find a unique target PDU session. However, in the basic idea of IP domain, how to effectively configure and utilize IP domain is an urgent problem to be solved, which is manifested in the following two aspects:
First, in related art, SMF assigns different IP domains is an actual implementation, such as relying on local configuration, etc. That is to say, the IP domain information of SMF is pre-configured or based on implementation, which is not dynamic enough, and the information definition of IP domain is consistent with It is not clear how the IP domain field obtained by the application function (AF, Application Function ) is consistent;
Second, when the Network Address Translation (NAT, Network Address Translation) method is used, AF guesses the relationship between the address after NAT and the IP domain based on a pre-defined inference, so that AF can select the corresponding IP domain field in the session binding. This actual implementation relies on configuration, which is not flexible enough, dynamic enough, and not friendly enough for interaction. It is very likely that the IP domain information understood by AF is inconsistent with the IP domain information used inside the core network (such as the fifth-generation mobile communication technology (5G) core network).

Based on this, in the embodiments of the present disclosure, on the one hand, SMF dynamically obtains IP domain information from UDM or UDR, so that the definition of IP domain obtained by SMF is the same as the definition of IP domain obtained by AF; on the other hand, in In the case of using NAT, open the interface between SMF and NAT and perform information exchange, so that the IP domain information understood by AF is consistent with the IP domain information used inside the core network.

According to the embodiment of the present disclosure, the IP domain information is dynamically obtained from UDM or UDR by SMF, so that the definition of the IP domain obtained by the SMF is the same as the definition of the IP domain obtained by the AF, thereby effectively configuring the IP domain information; in the case of using NAT, by opening the interface between SMF and NAT and exchanging information, the IP domain information understood by AF is consistent with the IP domain information used inside the core network, thereby effectively using the IP domain information.

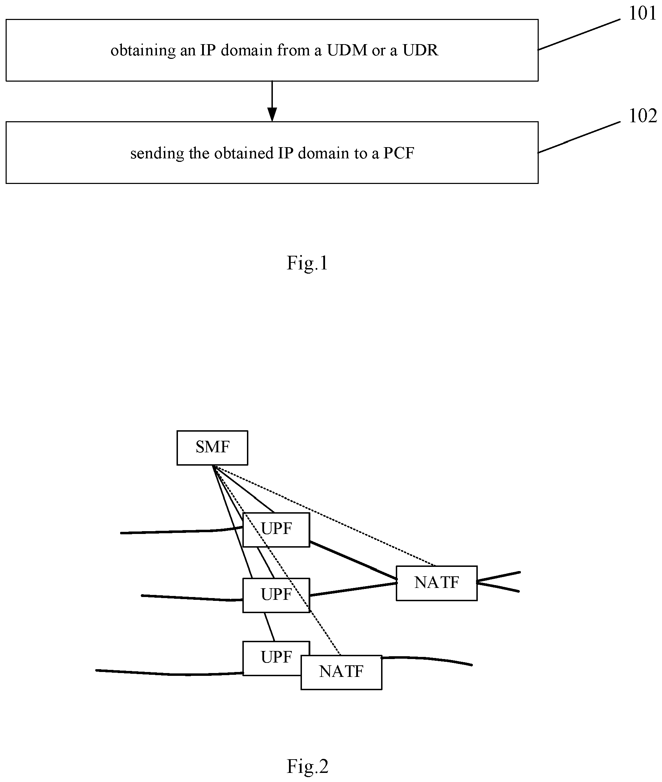

The embodiment of the present disclosure provides an information processing method applied to SMF, as shown in Fig. 1, the method includes:
Step 101: obtaining an IP domain from a UDM or a UDR;
Step 102: sending the obtained IP domain to a PCF.

In actual application, the SMF may be called an SMF entity, the UDM may be called a UDM entity, the UDR may be called a UDR entity, and the PCF may be called a PCF entity.

The UDM can also be called the Unified Data Management function, and the UDR can also be called the Unified Data Repository function.

In order to realize the dynamic configuration of IP domain information, the definition of IP domain obtained by SMF is the same as that obtained by AF. AF or an external Dynamic Host Configuration Protocol (DHCP) server or AAA server can write the IP domain information into the UDM or UDR through the capability opening function, that is, configuring or providing the IP domain information to the UDM or UDR through the capability opening function, or configuring the IP domain configuration information through local configuration or network management Operation Administration and Maintenance (OAM) to the UDM or UDR, and then the UDM or UDR provides the IP domain information to the SMF, so that the SMF can dynamically obtain the IP domain information.

In actual application, the SMF can obtain the IP domain from the UDM or UDR during the session establishment process.

When allocating the IP address, the SMF needs to obtain the subscribed IP index, so as to use the obtained subscribed IP index to allocate the IP address.

Based on this, in one embodiment, when obtaining the IP domain from UDM or UDR, the method may also include:
obtaining the IP index from UDM or UDR.
the IP index can be obtained from UDM or UDR during session establishment.

Correspondingly, AF or an external DHCP server or AAA server can write (also called configuration or provide) the IP domain information and IP index into UDM or UDR through the capability opening function, or IP domain and IP index may be configured to UDM or UDR through local configuration or network management OAM.

Here, the IP index may include an IP address pool ID, and the SMF may use the IP address pool corresponding to the IP address pool ID to allocate the terminal IP address.

The definition format of IP index is: address allocation mode identification + IP address Pool ID.

In the related art, three address allocation modes are provided, including: SMF allocation of IP addresses, UPF allocation of IP addresses, and DHCP or DN-AAA server allocation of IP addresses. Each address allocation method corresponds to an identifier, that is, ID; correspondingly, the definition format in the IP index is: address allocation method ID+IP address Pool ID.

In actual application, the definition format of IP domain can be: company name. city. province. operator. country. That is to say, the format of the IP domain is similar to the definition of a Uniform Resource Locator (URL, Uniform Resource Locator) to distinguish different third-party DHCPs or AAA servers.

In step 102, during actual application, after the PCF receives the IP domain information, it writes the IP domain information to the binding support function (BSF, Binding Support Function), and the BSF writes the IP domain information to the Network Repository Function (NRF). In this way, when the AF wants to perform a session binding search, the AF will carry UE IP address information and IP domain information to find the corresponding BSF and PCF through the NRF, thereby determining the PDU session.

When the NAT method is used, it is required to transmit IP domain information on the user plane, so that the IP domain information understood by AF is inconsistent with the IP domain information used inside the core network; at the same time, in related art, SMF cannot obtain NAT information, so the interface between SMF and NAT is enabled and information is exchanged, a network configuration can be performed well.

Based on this, in an embodiment, the method may also include:
sending the IP domain corresponding to the terminal to the network address translation function (NATF for short).

In actual application, for the convenience of implementation, the SMF may interact with the network address translation function based on the N4 interface protocol, as shown in Fig. 2 .

Based on this, in an embodiment, the SMF may send the IP domain corresponding to the terminal to the network address translation function based on the N4 interface protocol.

Exemplarily, the SMF can multiplex the N4 interface protocol to establish an interface between the SMF and the network address translation function, such as that SMF or NATF mutually initiate the N4 association establishment process, thereby establishing the N4 interface, and using the established interface to transfer information, such as sending the IP domain corresponding to the terminal to the network address translation function.

In an embodiment, the SMF may also sending the IP domain corresponding to the terminal to the network address translation function through the selected UPF. Exemplarily, through the unvarnished transmission of the UPF, the SMF sends the IP domain corresponding to the terminal to a network address translation function.

The SMF needs to determine the IP address of the terminal, and send the IP address of the terminal to the network address translation function, so that when the data packet of the terminal enters, the network address translation function can clarify the IP address of the terminal domain, and then select a suitable external public network address field for address mapping according to the IP domain of the terminal.

Based on this, in an embodiment, the method may also include:
determining the IP address of the terminal;
sending the IP address of the terminal to the network address translation function.

Here, in practical application, the SMF also needs to determine the network address translation function corresponding to the terminal.

Based on this, in an embodiment, the method may also include:
selecting UPF;
determining the corresponding network address translation function according to the selected UPF.

The SMF selects the UPF during the session establishment process .

The SMF can also determine the corresponding network address translation function according to the operator's local policy. Exemplarily, the SMF may know which network address translation function to select according to the deployment location of the selected UPF; the SMF may also be based on the characteristics of the PDU session, for example, the session is established for a specific enterprise user, Selecting a corresponding NAT function; in addition, the SMF may also consider load balancing and select a corresponding NAT function. The embodiment of the present disclosure does not limit the specific processing procedure for the SMF to determine the corresponding network address translation function according to the operator's local policy.

After the network address translation function receives the IP domain information of the terminal sent by the SMF, it may feed back acknowledgment (i.e., ACK) information to the SMF.

Here, in actual application, the corresponding relationship between the IP domain and the external IP address field can be pre-configured in the network address translation function. If there is no IP domain information of the terminal in the corresponding relationship between the IP domain and the external IP address field, the network address translation function may feed back a selection failure indication to the SMF, thereby triggering the SMF to reselect the network address translation function.

Correspondingly , the embodiment of the present disclosure also provides an information processing method applied to UDM or UDR, including:
providing an IP domain to SMF.

That is to say, UDM or UDR sends IP domain to SMF.

In one embodiment, the IP domain is provided to the SMF during the session establishment process.

In one embodiment, the method may also include:
AF or DHCP server configuring the IP domain to the UDM or UDR through the capability opening function.

Here, in actual application, the IP domain can also be configured in the UDM or UDR through local configuration or network management OAM.

It can be seen from the above description that the provided IP domain satisfies one of the following conditions:
the IP domain is provided to the UDM or the UDR by an AF or a DHCP server or an AAA server through a capability opening function;
the IP domain is configured by a network management device to the UDM or the UDR;
the IP domain is configured locally.

In an embodiment, when providing the IP domain to the SMF, the method may further include:
providing the IP index to the SMF.

Correspondingly, the AF or DHCP server configures the IP domain and IP index to the UDM or UDR through the capability opening function. In actual application, the IP domain and IP index can also be configured to UDM or UDR through local configuration or network management OAM.

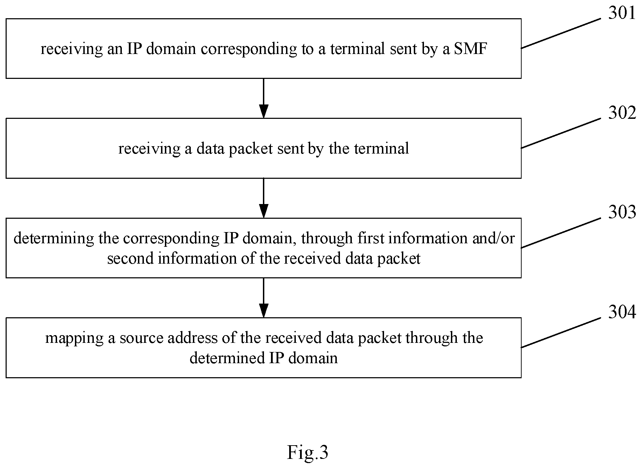

Correspondingly, the embodiment of the present disclosure also provides an information processing method, which is applied to the network address translation function. As shown in Fig. 3, the method includes:
Step 301: receiving an IP domain corresponding to a terminal sent by a SMF, where the corresponding IP domain is obtained from a UDM or a UDR;
Step 302: receiving a data packet sent by the terminal;
Step 303: determining the corresponding IP domain, through first information and/or second information of the received data packet, where the first information represents a tunnel path of the received data packet, the second information represents an IP address of the terminal;
Step 304: mapping a source address of the received data packet through the determined IP domain.

In one embodiment, when receiving the IP domain corresponding to the terminal sent by the SMF, the method may also include:
receiving the IP address of the terminal sent by the SMF.

In an embodiment, the specific implementation of step 301 may include:
the receiving the IP domain corresponding to the terminal sent by the SMF includes:
receiving the IP domain corresponding to the terminal sent by the SMF, based on an N4 interface protocol;
   or
receiving the IP domain corresponding to the terminal sent by the SMF, through the UPF selected by the SMF.

In one embodiment, the method may also include:
feeding back acknowledgement information to the SMF.

In an embodiment, the specific implementation of step 304 may include:
mapping the source address of the received data packet, through the determined IP domain and a corresponding relationship between the IP domain and an external IP address field.

According to the information processing method, the IP domain information is dynamically obtained from UDM or UDR by SMF, so that the definition of the IP domain obtained by the SMF is the same as the definition of the IP domain obtained by the AF, thereby effectively configuring the IP domain information; in the case of using NAT, by opening the interface between SMF and NAT and exchanging information, the IP domain information understood by AF is consistent with the IP domain information used inside the core network, thereby effectively using the IP domain information.

The present disclosure will be further described in detail below in conjunction with the application examples.

In this embodiment, the network address translation function is referred to as NATF for short.

In this application example, AF or an external DHCP server writes the IP index (including IP address pool ID information) and IP domain into UDM or UDR through the capability opening function; or writes the IP index (including IP address pool ID information) and IP domain configuration to UDM or UDR through local configuration or network management Operation Administration and Maintenance (OAM).
the definition format of IP domain can be: company name. city. province. operator. country. The definition format of IP index is: address allocation method + IP address Pool ID.

In this embodiment, an interface between SMF and NATF is designed, and the interface protocol can reuse the Packet Forwarding Control Protocol (PFCP) interface protocol of N4. The relationship between NATF and UPF is preconfigured in SMF, that is, if SMF selects a suitable PDU Session Anchor Point (PSA) UPF according to related art, then NATF is also selected accordingly.

The interaction between SMF and NATF includes: SMF or NATF mutually initiates the N4 association establishment process, and SMF sends UE IP address and corresponding IP domain information to NATF. According to the virtual local area network (VLAN) information or other tunnel information and source address information when the data packet enters, NATF can clarify the corresponding IP domain information, and select the appropriate external public network address field for address mapping according to the IP domain information. The networking structure shown in Fig. 2 can be used.

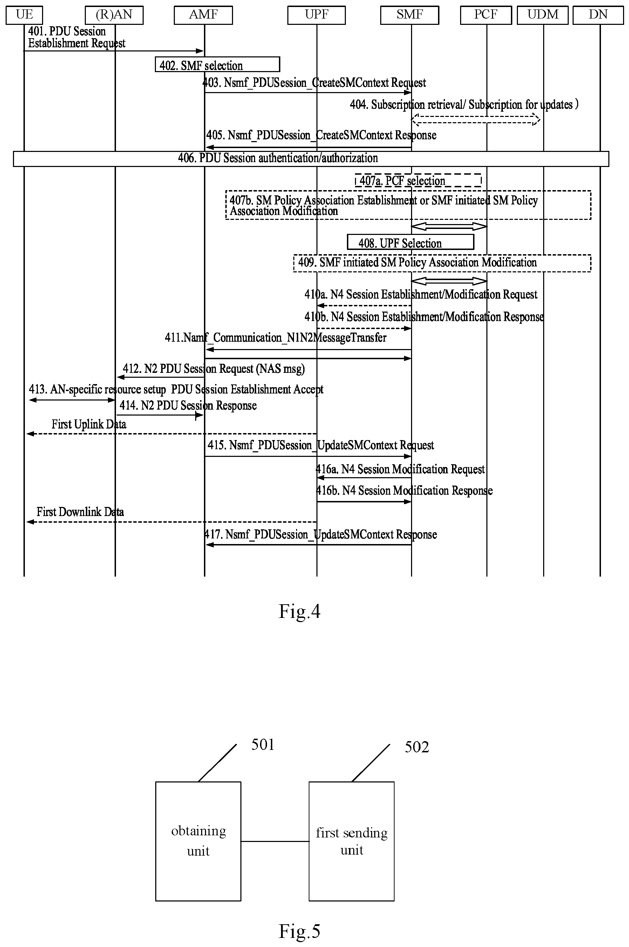

As shown in Fig. 4, the PDU session establishment process of this embodiment includes the following steps:
Step 401: UE initiating a PDU session establishment request;
Step 402: after receiving the request, the Access and Mobility Management Function (AMF) performs an SMF selection;
Step 403: AMF sending to the selected SMF a session management context establishment request (Nsmf_PDUSession_CreateSMContext Request) for establishing a PDU session;
Step 404: after receiving a request, SMF performing a Subscription retrieval/Subscription for updates with the UDM, and then executing step 405;
In this step, UDM sends IP index and IP domain information to SMF;
Step 405: SMF sending back a session management context establishment response (Nsmf_PDUSession_CreateSMContext Response) of the PDU session to the AMF, and then executing step 406;
Step 406: LTE performing a PDU Session authentication/authorization with the network side, and then executing step 407a;
Step 407a: SMF performing a PCF selection;
Step 407b: SMF performing a session management policy association establishment (SM Policy Association Establishment) or an SMF initiated SM Policy Association Modification with PCF, and then executing step 408;
Among them, in the process of interaction between SMF and PCF, SMF sends IP address and IP domain information to PCF;
Step 408: SMF performing UPF selection;
Here, after the SMF obtains the IP domain information and IP index (which can specify the IP address pool ID) information, it can use related art to obtain the LTE's IP address (for example, by using one of the above three address allocation methods), and select the appropriate UPF during the process;
Step 409: SMF performing SMF initiated SM Policy Association Modification with PCF, and then executing step 410a;
Here, in this step, when the UPF allocates an IP address, the SMF acquires the IP address allocated by the UPF and sends it to the PCF. This step is optional.

Step 410a: SMF sending N4 session establishment or modification request (N4 Session Establishment/Modification Request) to UPF;
Step 410b: after receiving the request, the UPF sends an N4 session establishment or modification response (N4 Session Establishment/Modification Response) to the SMF, and then executing step 411;
Here, after step 410b is completed, the N4 interface establishment process (step10) of steps 410a and 410b is reused, and the SMF will establish a connection with NATF;
Step 411: SMF sending to the AMF a N1 N2 message transfer ( Namf_Communication_N1N2MessageTransfer) message to AMF, and then executing step 412;
Step 412: after receiving the message, AMF sending a PDU session request (N2 PDU Session Request) to the access network (AN) or radio access network (RAN);
Here, the request is a Non-Access Stratum (NAS) message (msg); the AN or RAN is referred to as (R)AN for short in the following description;
Step 413: (R)AN interacting with UE, allocating specific resources (AN-specific resource setup), and then executing step 414;
Here, this step can also be called PDU Session Establishment Accept ( PDU Session Establishment Accept);
Step 414: (R)AN sending a PDU session establishment response (N2 PDU Session Response) to AMF, and then executing step 415;
Step 415: AMF sending a request for updating the session management context of the PDU session to the SMF (Nsmf_PDUSession_UpdateSMContext Request);
Step 416a: after receiving the request, the SMF sending an N4 Session Modification Request (N4 Session Modification Request) to the UPF;
Step 416b: after receiving the request, the UPF sending an N4 Session Modification Response (N4 Session Modification Response) to the SMF, and then executing step 417;
Step 417: SMF sending to AMF an updating session management context response of the PDU session (Nsmf_PDUSession_UpdateSMContext Response) to the AMF.

After the PDU session is established, in the process of sending data packets, for the uplink service flow, NATF can clarify the corresponding IP domain information according to the VLAN information or other tunnel path information when the data packets enter, and the LTE IP address information, and selects according to the IP domain information a suitable external public network address field for address mapping.

Afterwards, AF can infer IP domain information based on the public network address to perform session binding lookup. Exemplarily, for example, the operator negotiates with a third party on the public network address fields that third-party terminals can use, such as allocating 172.168.1.xxx to factory 1; 172.168.2.xxx to factory 2, and AF can use these The negotiated information deduces the IP domain information. Here, the specific allocation method is offline and negotiated between the operator and the third party. The embodiment of the present disclosure does not limit the specific processing process of inferring the IP domain information according to the public network address.

It is more and more common to assign private network addresses to industry users in the industry network, and a dynamic and real-time private network address allocation method is needed to solve related problems. The solution provided by the embodiment of the present disclosure makes the relevant business process clearer, so that the resolution of the private network address conflict no longer depends on the vague operator configuration, but becomes a standard process.

In order to realize the solution in an embodiment of the present disclosure, the embodiment of the present disclosure also provides an information processing device, which is set on the SMF, as shown in Fig. 5, the device includes:
an obtaining unit 501, configured to obtain an Internet Protocol (IP) domain from a Unified Data Management (UDM) or a Unified Data Repository (UDR);
a first sending unit 502, configured to send the obtained IP domain to a Policy Control Function (PCF).

In an embodiment, the obtaining unit 501 is configured to obtain the IP domain from the UDM or the UDR during a session establishment procedure.

In an embodiment, when the IP domain is obtained from the UDM or the UDR, the obtaining unit 501 is further configured to obtain an IP index from the UDM or the UDR.

In an embodiment, the device further includes a second sending unit configured to send an IP domain corresponding to a terminal to a network address translation function; the corresponding IP domain is obtained from UDM or the UDR

In an embodiment, the device further includes a second determining unit configured to:
determine an IP address of the terminal;
send the IP address of the terminal to the network address translation function.

In an embodiment, the second determining unit is further configured to:
select a User Plane Function (UPF);
determine the corresponding network address translation function according to the selected UPF;
   or
determine the corresponding network address translation function according to an operator's local policy.

In an embodiment, the second sending unit is further configured to:
send the IP domain corresponding to the terminal to the network address translation function, based on an N4 interface protocol;
   or
send the IP domain corresponding to the terminal to the network address translation function, through the selected UPF.

In an embodiment, the device further includes:
a second receiving unit, configured to receive acknowledgement information fed back by the network address translation function.

In actual application, the obtaining unit 501, the first sending unit 502, the second sending unit, and the second receiving unit can be implemented by a communication interface in the information processing device; the second determining unit can be implemented by a processor in the information processing device.

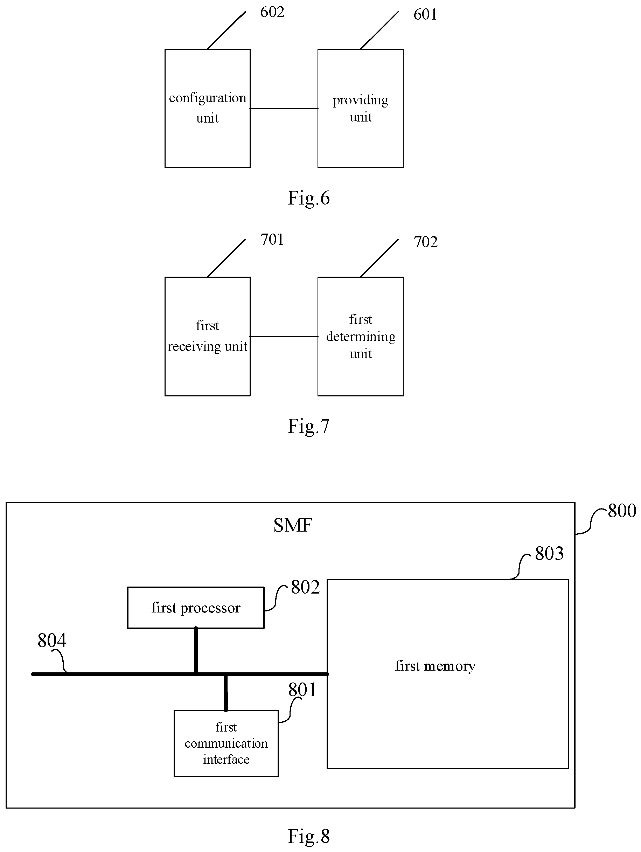

In order to implement the method on the UDM or UDR side in an embodiment of the present disclosure, the embodiment of the present disclosure also provides an information processing device, which is set on the UDM or UDR, as shown in Fig. 6, the device includes:
a providing unit 601, configured to provide an IP domain to an SMF.

In an embodiment, the providing unit 601 is configured to provide an IP domain to the SMF during a session establishment procedure.

In an embodiment, the providing unit 601 is configured to provide an IP index to the SMF when the IP domain is provided to the SMF.

In an embodiment, as shown in Fig.6, the device further includes a configuration unit 602 configured to configure IP domain.

In an embodiment, the configuration unit 602 is configured to:
provide the IP domain to the UDM or the UDR by an Application Function (AF) or a Dynamic Host Configuration Protocol (DHCP) server or an Authentication, Authorization, Accounting (AAA) server through a capability opening function;
   or
configure the IP domain by a network management device to the UDM or the UDR;
configure the IP domain locally.

In practical application, the providing unit 601 may be realized by a communication interface in the information processing device; the configuration unit 602 may be realized by a processor in the information processing device combined with a communication interface.

In order to implement the method on the network address translation function side in an embodiment of the present disclosure, the embodiment of the present disclosure also provides an information processing device, which is set on the network address translation function, as shown in Fig. 7 , the device includes:
a first receiving unit 701, configured to:
receive an Internet Protocol (IP) domain corresponding to a terminal sent by a Session Management Function (SMF), where the corresponding IP domain is obtained from a Unified Data Management (UDM) or a Unified Data Repository (UDR); and receive a data packet sent by the terminal
a first determining unit 702, configured to:
determine the corresponding IP domain, through first information and/or second information of the received data packet, where the first information represents a tunnel path of the received data packet, the second information represents an IP address of the terminal; and map a source address of the received data packet through the determined IP domain.

In an embodiment, the first receiving unit 701 is further configured to receive the IP address of the terminal sent by the SMF when receiving the IP domain corresponding to the terminal sent by the SMF.

In an embodiment, the first receiving unit 701 is configured to:
receive the IP domain corresponding to the terminal sent by the SMF, based on an N4 interface protocol;
   or
receive the IP domain corresponding to the terminal sent by the SMF, through the UPF selected by the SMF.

In an embodiment, the device may further include: a third sending unit configured to feed back acknowledgment information to the SMF.

In an embodiment, the first determining unit 702 is configured to map the source address of the received data packet, through the determined IP domain and a corresponding relationship between the IP domain and an external IP address field.

In practical application, the first receiving unit 701 and the third sending unit may be implemented by a communication interface in the information processing device; the first determining unit 702 may be implemented by a processor in the information processing device.

It should be noted that: when the information processing device provided in the above-mentioned embodiment transmits information, the division of the above-mentioned program modules is used as an example for illustration. In practical applications, the above-mentioned processing allocation can be completed by different program modules according to needs. That is, the internal structure of the device is divided into different program modules to complete all or part of the processing described above. In addition, the information processing device and the information processing method embodiments provided in the above embodiments belong to the same concept, and the specific implementation process thereof is detailed in the method embodiments, and will not be repeated here.

Based on the hardware implementation of the above program modules, and in order to implement the method on the SMF side in an embodiment of the present disclosure, the embodiment of the present disclosure also provides an SMF, as shown in Fig. 8 , the SMF 800 includes :
a first communication interface 801 capable of exchanging information with other network elements;
a first processor 802, connected to the first communication interface 801 to implement information interaction with other network elements, and configured to execute the method provided by one or more technical solutions on the SMF side when running a computer program; the computer programs are stored in a first memory 803 .

Specifically, the first communication interface is configured to obtain the IP domain from the UDM or UDR; and send the obtained IP domain to the PCF.

In an embodiment, the first communication interface 801 is configured to obtain an IP domain from a UDM or UDR during session establishment.

In an embodiment, the first communication interface 801 is further configured to obtain the IP index from the UDM or UDR when obtaining the IP domain from the UDM or UDR.

In an embodiment, the first communication interface 801 is further configured to send the IP domain corresponding to the terminal to the network address translation function; the corresponding IP domain is obtained from UDM or UDR.

In an embodiment, the first processor 802 is configured to:
determine the IP address of the terminal;
send the IP address of the terminal to the network address translation function.

In an embodiment, the first processor 802 is further configured to:
select UPF; determine the corresponding network address translation function according to the selected UPF;
   or,
determine the corresponding network address translation function according to the operator's local policy.

In an embodiment, the first communication interface 801 is configured to:
send the IP domain corresponding to the terminal to the network address translation function, based on a N4 interface protocol;
   or,
send the IP domain corresponding to the terminal to the network address translation function through the selected UPF.

In an embodiment, the first communication interface 801 is further configured to receive acknowledgement information fed back by the network address translation function.

It should be noted that the specific processing procedures of the first processor 802 and the first communication interface 801 can be understood with reference to the above methods.

Of course, in actual application, various components in the SMF 800 are coupled together through the bus system 804. It can be appreciated that the bus system 804 is configured to enable connection communication between these components. In addition to the data bus, the bus system 804 also includes a power bus, a control bus and a status signal bus. However, for clarity of illustration, the various buses are labeled as bus system 804 in Fig. 8.

The first memory 803 in an embodiment of the present disclosure is configured to store various types of data to support the operation of the SMF 800. Examples of such data include: any computer programs for operating on SMF 800.

The methods disclosed in the foregoing embodiments of the present disclosure may be applied to the first processor 802 or implemented by the first processor 802. The first processor 802 may be an integrated circuit chip, which has a signal processing capability. In the implementation process, each step of the above method may be completed by an integrated logic circuit of hardware in the first processor 802 or an instruction in the form of software. The aforementioned first processor 802 may be a general-purpose processor, a digital signal processor (DSP, Digital Signal Processor), or other programmable logic devices, discrete gate or transistor logic devices, discrete hardware components, and the like. The first processor 802 may implement or execute various methods, steps, and logic block diagrams disclosed in the embodiments of the present disclosure. A general purpose processor may be a microprocessor or any conventional processor or the like. The steps of the method disclosed in the embodiments of the present disclosure may be directly implemented by a hardware decoding processor, or implemented by a combination of hardware and software modules in the decoding processor. The software module may be located in a storage medium, and the storage medium is located in the first memory 803, and the first processor 802 reads the information in the first memory 803, and completes the steps of the foregoing method in combination with its hardware.

In an exemplary embodiment, the SMF 800 can be implemented by one or more application-specific integrated circuits (ASIC, Application Specific Integrated Circuit), DSP, programmable logic device (PLD, Programmable Logic Device), complex programmable logic device (CPLD, Complex Programmable Logic Device), field-programmable gate array (FPGA, Field-Programmable Gate Array ), general-purpose processor, controller, microcontroller (MCU, Micro Controller Unit), microprocessor (Microprocessor) , or other electronic The component implements and is configured to perform the aforementioned method.

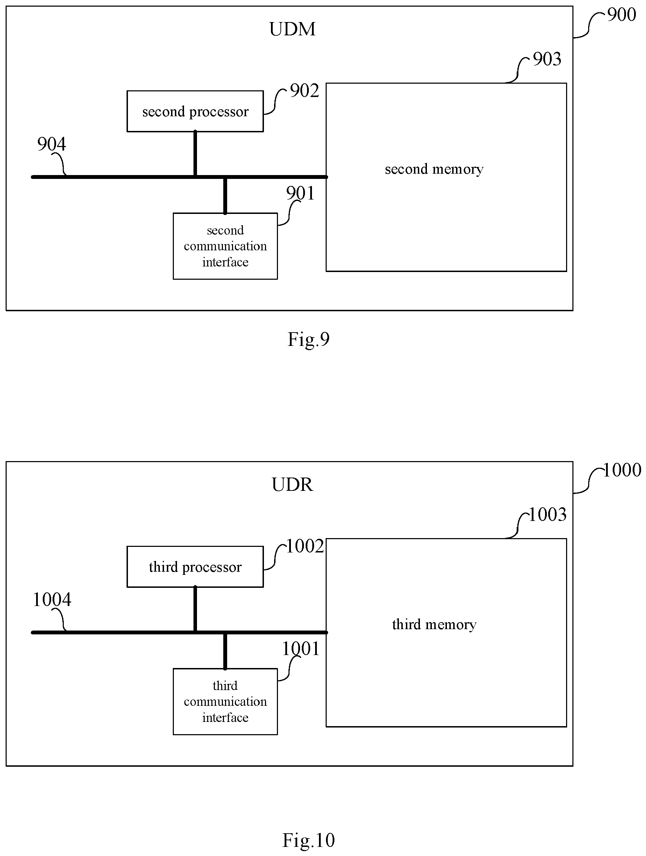

Based on the hardware implementation of the above program modules, and in order to implement the method on the UDM side in an embodiment of the present disclosure, the embodiment of the present disclosure also provides a UDM, as shown in Fig. 9, the UDM 900 includes:
a second communication interface 901, capable of information interaction with the SMF;
a second processor 902, connected to the second communication interface 901 to realize information interaction with the SMF, and is configured to execute the method provided by one or more technical solutions on the UDM side when running a computer program; the computer program stores on the second memory 903 .

Specifically, the second communication interface 901 is configured to provide an IP domain to the SMF.

In an embodiment, the second communication interface 901 is configured to provide an IP domain to the SMF during session establishment.

In an embodiment, the second communication interface 901 is further configured to provide an IP index to the SMF when providing the IP domain to the SMF.

In an embodiment, the second processor 902 is configured to configure an IP domain.

In an embodiment, the second processor 902 is configured to:
provide the IP domain to the UDM or the UDR by an Application Function (AF) or a Dynamic Host Configuration Protocol (DHCP) server or an Authentication, Authorization, Accounting (AAA) server through a capability opening function;
   or
configure the IP domain by a network management device to the UDM or the UDR;
configure the IP domain locally.

It should be noted that : the specific processing process of the second processor 902 and the second communication interface 901 can be understood with reference to the above method .

Of course, in actual application, various components in the UDM 900 are coupled together through the bus system 904. It can be appreciated that the bus system 904 is configured to enable connection communication between these components. In addition to the data bus, the bus system 904 also includes a power bus, a control bus and a status signal bus. However, for clarity of illustration, the various buses are labeled as bus system 904 in Fig. 9.

The second memory 903 in an embodiment of the present disclosure is configured to store various types of data to support the operation of the UDM 900. Examples of such data include: any computer program for operating on UDM 900.

The embodiment of the present disclosure may be applied to the second processor 902 or implemented by the second processor 902. The second processor 902 may be an integrated circuit chip with signal processing capability. In the implementation process, each step of the above method may be implemented by an integrated logic circuit of hardware in the second processor 902 or an instruction in the form of software. The aforementioned second processor 902 may be a general-purpose processor, DSP, or other programmable logic devices, discrete gate or transistor logic devices, discrete hardware components, and the like. The second processor 902 may implement or execute various methods, steps, and logic block diagrams disclosed in the embodiments of the present disclosure. A general purpose processor may be a microprocessor or any conventional processor or the like. The steps of the method disclosed in the embodiments of the present disclosure may be directly implemented by a hardware decoding processor, or implemented by a combination of hardware and software modules in the decoding processor. The software module may be located in a storage medium, and the storage medium is located in the second memory 903, and the second processor 902 reads the information in the second memory 903, and completes the steps of the foregoing method in combination with its hardware.

In an exemplary embodiment, the UDM 900 may be implemented by one or more ASICs, DSPs, PLDs, CPLDs, FPGAs, general processors, controllers, MCUs, Microprocessors, or other electronic components configured to perform the aforementioned methods.

Based on the hardware implementation of the above program modules, and in order to implement the method on the UDR side in an embodiment of the present disclosure, the embodiment of the present disclosure also provides a UDR, as shown in Fig. 10, the UDR 1000 includes:
a third communication interface 1001, capable of exchanging information with the SMF;
a third processor 1002, connected to the third communication interface 1001 to realize information interaction with the SMF, and configured to execute the method provided by one or more technical solutions on the UDR side when running a computer program; the computer program stores on the third memory 1003 .

Specifically, the third communication interface 1001 is configured to provide an IP domain to the SMF.

In an embodiment, the third communication interface 1001 is configured to provide an IP domain to the SMF during session establishment.

In an embodiment, the third communication interface 1001 is further configured to provide an IP index to the SMF when providing the IP domain to the SMF.

In an embodiment, the third processor 1002 is configured to configure an IP domain.

In an embodiment, the third processor 1002 is configured to:
provide the IP domain to the UDM or the UDR by an Application Function (AF) or a Dynamic Host Configuration Protocol (DHCP) server or an Authentication, Authorization, Accounting (AAA) server through a capability opening function;
   or
configure the IP domain by a network management device to the UDM or the UDR;
configure the IP domain locally.

It should be noted that : the specific processing process of the third processor 1002 and the third communication interface 1001 can be understood with reference to the above method .

Certainly, in actual application, various components in the UDR 1000 are coupled together through the bus system 1004. It can be appreciated that the bus system 1004 is configured to enable connection and communication between these components. In addition to the data bus, the bus system 1004 also includes a power bus, a control bus and a status signal bus. However, the various buses are labeled as bus system 1004 in Fig. 10 for clarity of illustration.

The third memory 1003 in an embodiment of the present disclosure is configured to store various types of data to support the operation of the UDM 900. Examples of such data include: any computer program for operating on UDR 1000.

The methods disclosed in the foregoing embodiments of the present disclosure may be applied to the third processor 1002 or implemented by the third processor 1002. The third processor 1002 may be an integrated circuit chip, which has a signal processing capability. In the implementation process, each step of the above method may be completed by an integrated logic circuit of hardware in the third processor 1002 or an instruction in the form of software. The aforementioned third processor 1002 may be a general-purpose processor, DSP, or other programmable logic devices, discrete gate or transistor logic devices, discrete hardware components, and the like. The third processor 1002 may implement or execute various methods, steps, and logic block diagrams disclosed in the embodiments of the present disclosure. A general purpose processor may be a microprocessor or any conventional processor or the like. The steps of the method disclosed in the embodiments of the present disclosure may be directly implemented by a hardware decoding processor, or implemented by a combination of hardware and software modules in the decoding processor. The software module may be located in a storage medium, and the storage medium is located in the third storage 1003, and the third processor 1002 reads information in the third storage 1003, and completes the steps of the foregoing method in combination with its hardware.

In an exemplary embodiment, the UDR 1000 may be implemented by one or more ASICs, DSPs, PLDs, CPLDs, FPGAs, general purpose processors, controllers, MCUs, Microprocessors, or other electronic components configured to perform the aforementioned methods.

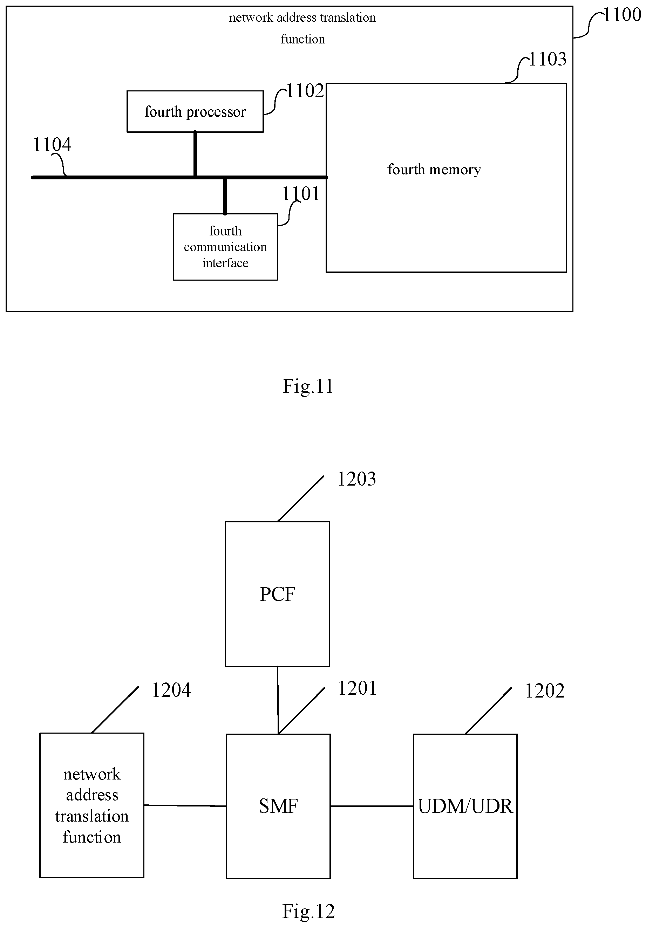

Based on the hardware implementation of the above program modules, and in order to implement the method on the network address translation function side in an embodiment of the present disclosure, the embodiment of the present disclosure also provides a network address translation function, as shown in Fig. 11 , the network address translation function 1100 includes:
a fourth communication interface 1101, capable of exchanging information with the SMF;
a fourth processor 1102, connected to the fourth communication interface 1101 to realize information interaction with the SMF, and configured to execute the method provided by one or more technical solutions on the network address translation function side when running a computer program; Computer programs are stored on the fourth memory 1103.

Specifically, the fourth communication interface 1101 is configured to receive the IP domain corresponding to the terminal sent by the SMF; the corresponding IP domain is obtained from UDM or UDR; and receive the data packet sent by the terminal;

The fourth processor 1102 is configured to use the first information and/or second information of the received data packet to determine the corresponding IP domain; the first information represents the tunnel path of the received data packet; the second information represents the IP address of the terminal; and using the determined IP domain to map the source address of the received data packet.

In an embodiment, the fourth communication interface 1101 is further configured to receive the IP address of the terminal sent by the SMF when receiving the IP domain corresponding to the terminal sent by the SMF.

In an embodiment, the fourth communication interface 1101 is configured to:
receive the IP domain corresponding to the terminal sent by the SMF, based on an N4 interface protocol;
   or
receive the IP domain corresponding to the terminal sent by the SMF, through the UPF selected by the SMF.

In an embodiment, the fourth communication interface 1101 is further configured to feed back acknowledgement information to the SMF.

In an embodiment, the fourth processor 1102 is configured to map the source address of the received data packet, through the determined IP domain and a corresponding relationship between the IP domain and an external IP address field.

It should be noted that : the specific processing procedures of the fourth processor 1102 and the fourth communication interface 1101 can be understood with reference to the above methods .

Certainly, in actual application, various components in the network address translation function 1100 are coupled together through the bus system 604. It can be appreciated that the bus system 604 is configured to enable connection communication between these components. In addition to the data bus, the bus system 604 also includes a power bus, a control bus and a status signal bus. However, for clarity of illustration, the various buses are labeled as bus system 604 in Fig. 6.

The fourth memory 1103 in an embodiment of the present disclosure is configured to store various types of data to support the operation of the network address translation function 1100. Examples of such data include: any computer program for operating on the network address translation function 1100.

The method disclosed in the foregoing embodiments of the present disclosure may be applied to the fourth processor 1102 or implemented by the fourth processor 1102. The fourth processor 1102 may be an integrated circuit chip, which has a signal processing capability. During implementation, each step of the above method may be implemented by an integrated logic circuit of hardware in the fourth processor 1102 or instructions in the form of software. The aforementioned fourth processor 1102 may be a general-purpose processor, DSP, or other programmable logic devices, discrete gate or transistor logic devices, discrete hardware components, and the like. The fourth processor 1102 may implement or execute various methods, steps, and logic block diagrams disclosed in the embodiments of the present disclosure. A general purpose processor may be a microprocessor or any conventional processor or the like. The steps of the method disclosed in the embodiments of the present disclosure may be directly implemented by a hardware decoding processor, or implemented by a combination of hardware and software modules in the decoding processor. The software module may be located in a storage medium, and the storage medium is located in the fourth memory 1103, and the fourth processor 1102 reads information in the fourth memory 1103, and completes the steps of the foregoing method in combination with its hardware.

In an exemplary embodiment, the network address translation function 1100 may be implemented by one or more ASICs, DSPs, PLDs, CPLDs, FPGAs, general-purpose processors, controllers, MCUs, Microprocessors, or other electronic components configured to perform the aforementioned methods.

It can be understood that the memory (the first memory 803, the second memory 903, the third memory 1003, and the fourth memory 1103) in this embodiment of the present disclosure may be a volatile memory or a non-volatile memory, and may also include volatile and both non-volatile memory. Among them, the non-volatile memory can be read-only memory (ROM, Read Only Memory), programmable read-only memory (PROM, Programmable Read-Only Memory), erasable programmable read-only memory (EPROM, Erasable Programmable Read-Only Memory), Only Memory), Electrically Erasable Programmable Read-Only Memory (EEPROM, Electrically Erasable Programmable Read-Only Memory), Magnetic Random Access Memory (FRAM, ferromagnetic random access memory), Flash Memory (Flash Memory), Magnetic Surface Memory, CD, or CD-ROM (Compact Disc Read-Only Memory) ; magnetic surface storage can be disk storage or tape storage . The volatile memory may be random access memory (RAM, Random Access Memory), which is used as an external cache. By way of illustration and not limitation, many forms of RAM are available such as Static Random Access Memory (SRAM, Static Random Access Memory), Synchronous Static Random Access Memory ( SSRAM , Synchronous Static Random Access Memory), Dynamic Random Access Memory (DRAM, Dynamic Random Access Memory), synchronous dynamic random access memory (SDRAM, Synchronous Dynamic Random Access Memory), double data rate synchronous dynamic random access memory (DDRSDRAM, Double Data Rate Synchronous Dynamic Random Access Memory ), enhanced Synchronous Dynamic Random Access Memory (ESDRAM, Enhanced Synchronous Dynamic Random Access Memory ), Synchronous Connection Dynamic Random Access Memory (SLDRAM, SyncLink Dynamic Random Access Memory ), Direct Memory Bus Random Access Memory (DRRAM, Direct Rambus Random Access Memory ). The memories described in the embodiments of the present disclosure are intended to include, but are not limited to, these and any other suitable types of memories.

In order to implement the method provided by the embodiment of the present disclosure, the embodiment of the present disclosure also provides an information processing system, as shown in Fig.

Here, it should be noted that: the specific processing procedures of the SMF 1201, UDM or UDR 1202, PCF 1203, and NAT function 1204 have been described in detail above, and will not be repeated here.

In an exemplary embodiment, the embodiment of the present disclosure also provides a storage medium, that is, a computer storage medium, specifically a computer-readable storage medium, for example, including a first memory 803 storing a computer program, and the above-mentioned computer program can be executed by the SMF 800 The first processor 802 executes to complete the steps described in the aforementioned method on the SMF side. For example, it includes a second memory 903 storing computer programs. The above steps, another example includes a third memory 1003 that stores computer programs, and the above computer programs can be executed by the third processor 1002 of the UDR 1000 to complete the steps described in the aforementioned UDR side method, and another example includes a fourth memory 1103 that stores computer programs , the above computer program may be executed by the fourth processor 1102 of the NAT function 1100 to complete the steps described in the aforementioned NAT function side method. The computer-readable storage medium may be memory such as FRAM, ROM, PROM, EPROM, EEPROM, Flash Memory, magnetic surface memory, optical disk, or CD-ROM.

It should be noted that: "first", "second", etc. are used to distinguish similar objects, and not necessarily used to describe a specific order or sequence.

In addition, the technical solutions described in the embodiments of the present disclosure may be combined arbitrarily if there is no conflict.

The above descriptions are only preferred embodiments of the present disclosure, and are not intended to limit the protection scope of the present disclosure.

## Claims

1. An information processing method, applied to a Session Management Function (SMF), comprising:
obtaining an Internet Protocol (IP) domain from a Unified Data Management (UDM) or a Unified Data Repository (UDR);
sending the obtained IP domain to a Policy Control Function (PCF).

2. The method according to claim 1, wherein the IP domain is obtained from the UDM or the UDR during a session establishment procedure.

3. The method according to claim 1, wherein when the IP domain is obtained from the UDM or the UDR, the method further comprises:
obtaining an IP index from the UDM or the UDR.

4. The method according to any one of claims 1 to 3, wherein the method further comprises:
sending an IP domain corresponding to a terminal to a network address translation function.

5. The method according to claim 4, wherein the method further comprises:
determining an IP address of the terminal;
sending the IP address of the terminal to the network address translation function.

6. The method according to claim 4, wherein the method further comprises:
selecting a User Plane Function (UPF);
determining the corresponding network address translation function according to the selected UPF.

7. The method according to claim 4, wherein the method further comprises:
determining the corresponding network address translation function according to an operator's local policy.

8. The method according to claim 4, wherein the sending the IP domain corresponding to the terminal to the network address translation function comprises:
sending the IP domain corresponding to the terminal to the network address translation function, based on an N4 interface protocol;
or
sending the IP domain corresponding to the terminal to the network address translation function, through the selected UPF.

9. The method according to claim 4, wherein the method further comprises:
receiving acknowledgement information fed back by the network address translation function.

10. An information processing method, applied to a Unified Data Management (UDM) or a Unified Data Repository (UDR), comprising:
providing an Internet Protocol (IP) domain to a Session Management Function (SMF).

11. The method according to claim 10, wherein an IP domain is provided to the SMF during a session establishment procedure.

12. The method according to claim 10, wherein when the IP domain is provided to the SMF, the method further comprises:
providing an IP index to the SMF.

13. The method according to any one of claims 10 to 12, wherein the provided IP domain satisfies one of the following conditions:
the IP domain is provided to the UDM or the UDR by an Application Function (AF) or a Dynamic Host Configuration Protocol (DHCP) server or an Authentication, Authorization, Accounting (AAA) server through a capability opening function;
the IP domain is configured by a network management device to the UDM or the UDR;
the IP domain is configured locally.

14. An information processing method, applied to a Session Management Function (SMF), comprising:
sending an Internet Protocol (IP) domain corresponding to a terminal to a network address translation function, wherein the corresponding IP domain is obtained from a Unified Data Management (UDM) or a Unified Data Repository (UDR).

15. The method according to claim 14, wherein the method further comprises:
determining an IP address of the terminal;
sending the IP address of the terminal to the network address translation function.

16. The method according to claim 14, wherein the method further comprises:
selecting a User Plane Function (UPF) for the terminal;
determining the corresponding network address translation function according to the selected UPF.

17. The method according to claim 14, wherein the method further comprises:
determining the corresponding network address translation function according to an operator's local policy.

18. The method according to claim 14, wherein the sending the IP domain corresponding to the terminal to the network address translation function comprises:
sending the IP domain corresponding to the terminal to the network address translation function, based on an N4 interface protocol;
or
sending the IP domain corresponding to the terminal to the network address translation function, through the selected UPF.

19. The method according to any one of claims 14 to 18, wherein the method further comprises:
receiving acknowledgement information fed back by the network address translation function.

20. An information processing method, applied to a network address translation function, comprising:
receiving an Internet Protocol (IP) domain corresponding to a terminal sent by a Session Management Function (SMF), wherein the corresponding IP domain is obtained from a Unified Data Management (UDM) or a Unified Data Repository (UDR);
receiving a data packet sent by the terminal;
determining the corresponding IP domain, through first information and/or second information of the received data packet, wherein the first information represents a tunnel path of the received data packet, the second information represents an IP address of the terminal; and
mapping a source address of the received data packet through the determined IP domain.

21. The method according to claim 20, wherein when receiving the IP domain corresponding to the terminal sent by the SMF, the method further comprises:
receiving the IP address of the terminal sent by the SMF.

22. The method according to claim 20, wherein the receiving the IP domain corresponding to the terminal sent by the SMF comprises:
receiving the IP domain corresponding to the terminal sent by the SMF, based on an N4 interface protocol;
or
receiving the IP domain corresponding to the terminal sent by the SMF, through the UPF selected by the SMF.

23. The method according to claim 20, wherein the method further comprises:
feeding back acknowledgement information to the SMF.

24. The method according to any one of claims 20 to 23, wherein the mapping the source address of the received data packet through the determined IP domain comprises:
mapping the source address of the received data packet, through the determined IP domain and a corresponding relationship between the IP domain and an external IP address field.

25. An information processing device, comprising:
an obtaining unit, configured to obtain an Internet Protocol (IP) domain from a Unified Data Management (UDM) or a Unified Data Repository (UDR);
a first sending unit, configured to send the obtained IP domain to a Policy Control Function (PCF).

26. An information processing device, comprising:
a providing unit, configured to provide an Internet Protocol (IP) domain to a Session Management Function (SMF).

27. An information processing device, comprising:
a second sending unit, configured to send an Internet Protocol (IP) domain corresponding to a terminal to a network address translation function, wherein the corresponding IP domain is obtained from a Unified Data Management (UDM) or a Unified Data Repository (UDR).

28. An information processing device, comprising:
a first sending unit, configured to send an Internet Protocol (IP) domain corresponding to a terminal to a network address translation function, wherein the corresponding IP domain is obtained from a Unified Data Management (UDM) or a Unified Data Repository (UDR).

29. An information processing device, comprising:
a first receiving unit, configured to:
receive an Internet Protocol (IP) domain corresponding to a terminal sent by a Session Management Function (SMF), wherein the corresponding IP domain is obtained from a Unified Data Management (UDM) or a Unified Data Repository (UDR); and receive a data packet sent by the terminal
a first determining unit, configured to:
determine the corresponding IP domain, through first information and/or second information of the received data packet, wherein the first information represents a tunnel path of the received data packet, the second information represents an IP address of the terminal; and map a source address of the received data packet through the determined IP domain.

30. A Session Management Function (SMF), comprising: a first processor and a first communication interface; wherein,
the first communication interface is configured to: obtain an Internet Protocol (IP) domain from a Unified Data Management (UDM) or a Unified Data Repository (UDR), and send the obtained IP domain to a Policy Control Function (PCF);
or
the first communication interface is configured to send an IP domain corresponding to a terminal to a network address translation function, wherein the corresponding IP domain is obtained from a UDM or a UDR.

31. A Unified Data Management (UDM), comprising: a second processor and a second communication interface; wherein,
the second communication interface is configured to provide an Internet Protocol (IP) domain to a Session Management Function (SMF).

32. A Unified Data Repository (UDR), comprising: a third processor and a third communication interface; wherein,
the third communication interface is configured to provide an Internet Protocol (IP) domain to a Session Management Function (SMF).

33. A network address translation function, comprising:
a fourth communication interface, configured to:
receive an Internet Protocol (IP) domain corresponding to a terminal sent by a Session Management Function (SMF), wherein the corresponding IP domain is obtained from a Unified Data Management (UDM) or a Unified Data Repository (UDR); and receive a data packet sent by the terminal
a fourth processor, configured to:
determine the corresponding IP domain, through first information and/or second information of the received data packet, wherein the first information represents a tunnel path of the received data packet, the second information represents an IP address of the terminal; and map a source address of the received data packet through the determined IP domain.

34. A Session Management Function (SMF), comprising: a first processor and a first memory configured to store a computer program operable on the first processor,
wherein the first processor is configured to execute the computer program to perform the method according to any one of claims 1 to 9, or to perform the method according to any one of claims 14 to 19.

35. A Unified Data Management (UDM), comprising: a second processor and a second memory configured to store a computer program operable on the second processor,
wherein the second processor is configured to execute the computer program to perform the method according to any one of claims 10 to 13.

36. A Unified Data Repository (UDR), comprising: a third processor and a third memory configured to store a computer program operable on the third processor,
wherein the third processor is configured to execute the computer program to perform the method according to any one of claims 10 to 13.

37. A network address translation function, comprising: a fourth processor and a fourth memory configured to store a computer program operable on the fourth processor,
wherein the third processor is configured to execute the computer program to perform the method according to any one of claims 20 to 24.

38. A storage medium, storing a computer program, wherein the computer program is executed by a processor to perform the method according to any one of claims 1 to 9, or to perform method according to any one of claims 10 to 13, or to perform the method according to any one of claims 14 to 19, or to perform the method according to any one of claims 20 to 24.
